# EUROPEAN PATENT APPLICATION

(11) **EP 1 066 958 A1**
(43) Date of publication of application: **10.01.2001**
(21) Application number: 99113207.7
(22) Date of filing: 08.07.1999
(51) Int. Cl.: B32B 5/18, B32B 27/32, C08L 23/10

(54) **Thermoformable multi-layer partially foamed sheet**

(71) Applicant: Cryovac, Inc., Duncan, South Carolina 29334 (US)
(72) Inventor: Di Cesare, Gregorio, 20023 Cerro Maggiore (IT)
(74) Representative: De Carli, Elda

(57) **Abstract**

A thermoformable, multi-layer, sheet comprising a foamed layer (a) comprising polypropylene, at least one surface of which is directly adhered to a substantially unfoamed layer (b) comprising an ethylene-based polymer, said sheet being characterised in that the resin employed for the foamed layer is a blend of at least about 50 % by weight of polypropylene and from about 3 to less than about 50 % by weight of an ethylene-(C₃-C₈)α-olefin plastomer.

The presence of the ethylene-(C₃-C₈)α-olefin plastomer in the polypropylene foamed layer increases the bond with the directly adhering layer (b) thus preventing delamination problems upon thermoforming.

## Description

The present invention relates to a multi-layer, partially foamed, thermoformable sheet suitable for the production of packaging material.

In particular the present invention relates to a rigid or semi-rigid, multi-layer sheet of thermoplastic material comprising a foamed layer comprising polypropylene and, directly adhered thereto, a substantially unfoamed layer comprising an ethylene-based homo- or co-polymer, said sheet being thermoformable into shaped articles for packaging.

Thermoforming is a common method for forming trays to be used in the packaging art for holding the products to be packaged. In some cases pre-formed trays are fed to a filling machine which inserts or lays the product to be packaged onto the tray and then either seals on a lid or wrap the loaded tray up.

In most of the cases, particularly in the packaging of food products, e.g. fresh red meat or processed meat, a horizontal thermoform-fill-seal machine is employed. Said machine typically requires two separate webs of material, a lower or bottom web and an upper or top web.

The lower web must be designed to be easily thermoformable as the machine creates a more-or-less shallow tray therefrom by pulling it across a heated cavity.

When a lid is sealed to the tray or the tray rim, the lower web must also be heat-sealable and in some cases it is also required that it has a low permeability to gases, in particular oxygen, in order to prolong the shelf-life of oxygen susceptible products, e.g. most of the food products.

Other packaging machines, where an in-line thermoformable lower web is required, are those employed for skin packaging. In these machines the lower web is thermoformed into a tray, the product to be packaged is loaded thereon and the upper web is drawn down by vacuum all around the product until the film conforms so faithfully to the product contours that it becomes like a skin. Also in this case for the lower web, a thermoformable sheet is required that has good heat sealability and preferably also gas barrier properties.

Multi-layer sheets are therefore employed where the choice of the resins employed and the combination of the different layers is studied to provide the end structure with the desired properties.

Multi-layer cast sheets are typically employed, but more recently also multi-layer partially foamed sheets have been introduced in the market, as the appearance of a foamed material is well appreciated by the end users.

In addition to the foamed layer, the overall sheet will therefore comprise other layers, either co-extruded therewith or laminated thereto, to provide the end thermoformable sheet with improved heat-sealability properties, often with gas-barrier properties, and in some instances also with an easy opening feature.

One of the polymers most commonly employed for the foamed layer in a partially foamed thermoformable structure is polypropylene. Polypropylene is in fact easily thermoformable, stiff enough to give the sheet the desired rigidity and is furthermore a cheap resin.

One of the problems met however with these partially foamed structures is the poor bond at the interface with the foamed polypropylene layer. The presence of the blowing agent developing from the foamed layer may in fact create some blisters at the interface between the foamed layer and the layer directly adhering thereto with a high risk of delamination in particular at the thermoforming step.

In particular with a polypropylene foam layer, the use of a conventional polyethylene-based tie layer directly adhering thereto gives a fair adhesion and no delamination problems when thermoforming of the multi-layer sheet is carried out soon after the extrusion. However, if the sheet is allowed to age, the fair adhesion which is thus obtained may no longer be sufficient and delamination may occur during thermoforming.

WO 96/25290, dealing with a process for producing packaging materials with a layer of foamed polyolefin, teaches the use of a polyolefin based on the same monomer of the polyolefin that forms the foam layer, for the layer directly contacting the foam layer. While the bond between a foamed polypropylene layer and an unfoamed polypropylene layer is rather good, it has been found that when the partially foamed multi-layer sheet is used for the packaging of fat food products, like processed meat or cheese, the fat particles migrate very easily through the thermoplastic materials of the conventional sealants and reach the interface with the unfoamed polypropylene, that is rather impermeable to fats, leading to a remarkable delamination effect.

There is a need therefore for a partially foamed sheet material, comprising a foamed polypropylene layer, that can suitably be thermoformed into a shaped container, such as a tray, and used for the packaging of i.a. fat products, without delamination problems.

It has been found that it is possible to achieve this objective by blending the polypropylene in the foam layer with a minor proportion of an ethylene-(C₃-C₈)α-olefin plastomer and directly adhering said foam layer to a layer of a substantially unfoamed polyethylene-based polymer.

### SUMMARY OF THE INVENTION

A first object of the present invention is therefore a thermoformable, multi-layer, sheet comprising a foamed layer (a) comprising polypropylene, at least one surface of which is directly adhered to a substantially unfoamed layer (b) comprising an ethylene-based polymer, said sheet being characterised in that the resin used for the foamed layer is a blend of at least about 50 % by weight of polypropylene and from about 3 to less than about 50 % by weight of an ethylene-(C₃-C₈)α-olefin plastomer.

It has been found in fact that by blending the polypropylene with a minor amount of an ethylene-(C₃-C₈)α-olefin plastomer, the bond between the foamed layer and the substantially unfoamed layer comprising an ethylene-based polymer directly adhered thereto is extremely high and no delamination occurs even if the sheet is thermoformed after considerable ageing. It has also been found that no delamination occurs when fat food products are packaged.

The polypropylene used in the present invention for the foam layer is generally crystalline polypropylene, for example, isotactic polypropylene. While HMS polypropylene resins might be employed, it would not be necessary or advisable to use them as general purpose isotactic polypropylene is perfectly suitable for this application.

The polymer blend used for the foamed layer (a) will comprise at least about 50 % by weight of polypropylene, but preferably at least about 60 % by weight and more preferably at least about 70 % by weight.

The flexural modulus of the polypropylene used for the foam layer is typically comprised between about 1,200 MPa and about 2,150 MPa.

Polypropylene resins with a modulus lower than 1,500 MPa are named as "low modulus" and those with a flexural modulus be ≥ 1,500 MPa are named "high modulus" polypropylene resins. Examples of "low modulus" polypropylene resins are for instance those commercially available from Montell as Polypropylene KF 6100 (Flexural Modulus, evaluated by ISO Standard Method 178, of about 1,300 MPa) and Polypropylene YX37F (Flexural Modulus of about 1,200 MPa) while examples of "high modulus" polypropylene resins are those commercially available from Montell as Adstif™ 680 ADXP (Flexural Modulus of 2,150 MPa) and Adstif™ 699 ADXP (Flexural Modulus of 1,950 MPa).

The Melt Index of the polypropylene, measured by ASTM 1238 Condition E, may typically be up to 20 g/10 min and generally it is comprised between about 1 and about 15 g/10 min.

The multi-layer partially foamed sheet may comprise one or more foamed polypropylene layers. If the structure comprises at least two foamed layers, preferably one of the foamed layers comprises a low modulus polypropylene and the other a high modulus polypropylene.

The ethylene-(C₃-C₈)α-olefin plastomer to be blended with polypropylene for the foam layer is a low molecular weight ethylene-(C₃-C₈)α-olefin copolymer comprising ethylene and from about 5 to about 25 % by mole of at least one (C₃-C₈)α-olefin, polymerised in a substantially linear fashion by a homogeneous catalysis. The density of the suitable plastomers is typically comprised between 0.885 and 0.905 g/cm³, preferably between 0.890 and 0.904 g/cm³, and more preferably between 0.895 and 0.903 g/cm³.

The ratio of Mw/Mn is generally in the range of about 1.5 to about 3.5, preferably in the range of about 2.0 and about 3.0.

The Melt Index of the ethylene-(C₃-C₈)α-olefin plastomer is generally in the range of about 1.0 and about 20 g/10 min, and preferably in the range of about 1.5 to about 12 g/10 min.

Preferably said ethylene-(C₃-C₈)α-olefin plastomer is a low molecular weight ethylene-(C₄-C₈)α-olefin copolymer comprising ethylene and from about 5 to about 25 % by mole of at least one (C₄-C₈)α-olefin, polymerised in a substantially linear fashion using a single-site metallocene catalyst.

The amount of ethylene-(C₃-C₈)α-olefin plastomer to be blended with the polypropylene is typically comprised between about 5 and about 40 % by wt., preferably between about 7 and about 35 % by wt., and even more preferably between about 10 and about 30 % by wt.. As the risk of delamination increases with the flexural modulus of the polypropylene, the amount of ethylene-(C₃-C₈)α-olefin plastomer blended with the polypropylene is higher when a higher modulus polypropylene is employed..

The foaming process is preferably a chemical foaming, obtained by extruding the resins admixed with the suitable amount of a chemical blowing agent, i.e. a compound that reacts or decomposes at elevated temperatures, such as those employed in extrusion, to give a product that is normally a gas at atmospheric pressure.

It would however be possible also to employ a physical foaming process where foaming is obtained by the use of a blowing agent such as a hydrocarbon, a chlorinated or chlorofluorinated hydrocarbon, an inert gas, or a blend thereof.

The substantially unfoamed layer (b) is directly adhered to the foamed layer (a).

As used herein the phrase "directly adhered", as applied to sheet layers, is defined as adhesion of the subject sheet layer to the object sheet layer, without a tie layer, adhesive, or other layer there-between. In contrast, as used herein, the word "between", as applied to a sheet layer, expressed as being between two other specific layers, includes both direct adherence of the subject layer to the two other layers it is between, as well as a lack of direct adherence to either or both of the two other layers the subject layer is between, i.e., one or more additional layers can be imposed between the subject layer and one or more of the layers the subject layer is between.

The term "substantially unfoamed" is used herein to identify a layer that has not been submitted to a foaming, i.e. that has not been admixed with a chemical or physical foaming agent before or during extrusion. This term however does not exclude, in particular for the layer or layers that are directly adhered to the surfaces of the foam polypropylene layer, that the evolution of gas in the adjacent layer might give raise to a certain, non-substantial, foaming also in these layers.

The ethylene polymer of layer (b) can be an ethylene homopolymer or an ethylene copolymer with one or more other olefins and/or with a non-olefinic comonomer copolymerizable with ethylene, such as vinyl monomers, modified polymers thereof, and the like. Specific examples of ethylene copolymers include ethylene/α-olefin copolymers, ethylene/vinyl acetate copolymers, ethylene/ethyl acrylate copolymers, ethylene/butyl acrylate copolymers, ethylene/methyl acrylate copolymers, ethylene/acrylic acid copolymers, ethylene/methacrylic acid copolymers, ionomer resins, ethylene/alkyl acrylate/maleic anhydride ter-polymers, etc..

It can also conveniently be a modified ethylene homo- or co-polymer or a blend of an ethylene homopolymer or copolymer with a modified ethylene homo- or co-polymer, wherein as used herein the term "modified", when referred to any polyolefin, is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like; or by incorporating into the olefin homopolymer or copolymer, an unsaturated carboxylic acid, e.g., maleic acid, fumaric acid or the like, or a derivative thereof such as the anhydride, ester or metal salt or the like. Examples of preferred modified ethylene polymers are in particular ethylene co-polymers having an anhydride functionality, as defined above, grafted thereon and/or copolymerized therewith and/or blended therewith, wherein more preferably, such modified ethylene polymers have the anhydride functionality grafted on or polymerized therewith, as opposed to merely blended therewith.

Layer (b) may comprise also other polymers blended with the ethylene-based ones. As an example a composition suitable for layer (b) comprises a blend of a major proportion of an ethylene based, optionally modified, polymer with a minor proportion, e.g. 10 % by wt., 20 % by wt., 30 % by wt. of the total weight of the polymer blend, of a propylene-based polymer, such as polypropylene, ethylene-propylene copolymer, modified polypropylene, modified ethylene-propylene copolymer, and the like polymers.

In one preferred embodiment of the present invention recycle material is incorporated into said substantially unfoamed layer (b) to give additional bulk to the sheet.

In another preferred embodiment of the present invention said substantially unfoamed layer (b) essentially consists of ethylene-based polymers.

Preferably the foamed layer (a) and layer (b) are co-extruded.

According to the present invention, the overall partially foamed sheet may consist of only two layers : the foamed polypropylene layer (a) and the directly adhering substantially unfoamed layer (b) comprising an ethylene-based polymer. In such a case the ethylene-based polymer(s) of layer (b) will be suitably selected to give good heat-sealing properties to the end structure as the layer (b) will be the heat-sealing layer of the structure, i.e. the outer layer of the sheet involved in the heat-sealing thereof.

Preferably it will comprise a single polymer or a blend of two or more ethylene polymers with a melting point preferably < 130°C, and more preferably comprised between about 80°C and about 128 °C. In a two layer structure layer (b) may for example comprise heterogeneous or homogeneous ethylene-(C₄-C₈)-α-olefin copolymers having a density ≤ 0.915 g/cm³; blends thereof with minor amount of polyethylene homopolymers; ethylene-vinyl acetate copolymers; ethylene-acrylic or methacrylic acid copolymers including ionomers; blends of heterogeneous or homogeneous ethylene-(C₄-C₈)-α-olefin copolymers having a density from about 0.915 g/cm³ to about 0.930 g/cm³ with ethylene-vinyl acetate copolymers or ethylene-alkyl (meth)acrylate copolymers; ethylene-alkyl acrylate-maleic anhydride ter-polymers; and blends of the above polymers with modified ethylene polymers.

Preferably however the end sheet will comprise more than two layers, wherein layer (b) will mainly function as an inner tie layer, having one surface directly adhered to the foamed layer (a) and the other surface directly adhered to another layer of the overall structure.

When the structure contains only one foamed layer, preferably, even if not necessarily, said foamed layer (a) is an outer layer and more particularly it is the outermost layer of the multi-layer thermoformable sheet, i.e. the layer that is the furthest one from the packaged product.

Alternatively said foamed layer (a), can be coated on the surface that is not directly adhered to layer (b), with one or more layers of a thermoplastic foamed or solid material or blend of materials. Said additional layer(s) may be useful for instance to improve the appearance or the properties of the thermoformable sheet, e.g. providing a paper-like appearance or a colored/metallised appearance or providing the thermoformable sheet with UV absorbing properties, antistatic properties, or slip properties, and should be selected in such a way to withstand direct contact with the heated cavity die during thermoforming.

In the construction of the overall sheet it should be considered that the other outer layer, the layer in direct contact with the packaged product, will be the heat-sealing layer.

Such a heat-sealing layer would be a layer of a substantially unfoamed, heat-sealable resin or blend of resins, and will provide for an improved heat-sealability of the overall structure.

Suitable heat-sealing polymers preferably have a melting point < 140 °C, and preferably < 130°C. Such a heat-sealing layer will typically comprise polyethylene homopolymers; heterogeneous or homogeneous ethylene-(C₄-C₈)-α-olefin copolymers having a density ≤ 0.915 g/cm³; blends thereof with minor amount of polyethylene homopolymers; ethylene-vinyl acetate copolymers; ethylene-acrylic or methacrylic acid copolymers including ionomers; heterogeneous or homogeneous ethylene-(C₄-C₈)-α-olefin copolymers having a density from about 0.915 g/cm³ to about 0.930 g/cm³; blends thereof with ethylene-vinyl acetate copolymers or ethylene-alkyl (meth)acrylate copolymers; ethylene-propylene-butene ter-polymers; ethylene-alkyl acrylate-maleic anhydride ter-polymers; and the like polymers.

In a preferred embodiment of the present invention the thermoformable, multi-layer, sheet also comprises an easy opening feature.

As an example, the heat-sealing layer of the thermoformable sheet may comprise a so-called "peelable" blend. When the thermoformed bottom web, bearing said peelable blend in the upper heat-sealing layer, is sealed to a suitably selected top web, easy opening of the end package is then obtained by separating the two webs at the seal interface by a peeling mechanism.

Alternatively a thin heat-sealing layer may be adhered directly to a layer of a polymer with which it has a low bond. In this case the easy opening of the package is obtained by first breaking through the thickness of the thin heat-sealing layer and then delaminating said heat-sealing layer from the underlying support or film.

Still alternatively the easy opening feature may be provided by the use of a layer of a blend of polymers having a low internal cohesion. Said low cohesion layer may possibly be coated with a thin heat-sealing layer. Opening of the package in such a case is achieved by internal rupture of the low cohesion layer (and if present of the thin heat-sealing layer first). Examples of blends useful in this alternative easy opening system are described for instance in EP-B-192,131 or PCT/EP99/02411.

If gas-barrier properties are desired, the multi-layer partially foamed sheet will comprise also an intermediate substantially unfoamed gas barrier layer, i.e. a layer of a suitably selected polymeric material and of the suitably selected thickness to provide for an overall multi-layer sheet with an oxygen permeability lower than 200 cm³/m².day.atm, preferably lower than 150 cm³/m².day.atm, more preferably lower than 125 cm³/m².day.atm, and even more preferably lower than 100 cm³/m².day.atm.

Suitable resins for use in said functional layer are preferably ethylene-vinyl alcohol copolymers (EVOH), vinylidene chloride copolymers (PVDC), polyamides, and blends of one or more EVOH with one or more polyamides.

As used herein, "EVOH" refers to ethylene-vinyl alcohol copolymers. EVOH includes saponified or hydrolyzed ethylene-vinyl acetate copolymers, and refers to vinyl alcohol copolymers having an ethylene comonomer content preferably comprised from about 28 to about 48 mole %, more preferably, from about 32 to about 44 mole % ethylene, and even more preferably, from about 38 to about 44 mole % ethylene, and a saponification degree of at least 85 %, preferably at least 90 %.

As used herein the term PVDC refers to a vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) or to a blend thereof in different proportions. Generally said PVDC contains plasticisers and/or stabilisers as known in the art.

As used herein, the term polyamide is intended to refer to both polyamides and co-or ter-polyamides. This term specifically includes aliphatic polyamides or co-polyamides, aromatic polyamides or co-polyamides, and partially aromatic polyamides or co-polyamides, modifications thereof and blends thereof.

When a gas-barrier layer is present, it may be necessary to use tie layers in order to suitably increase the bond between said layer and those directly adhering thereto. Suitable tie layers will preferably comprise modified polyolefins, and more preferably modified polyethylene, and modified ethylene co-polymers, such as modified ethylene-α-olefin copolymers, and modified ethylene-unsaturated ester copolymers, e.g. modified ethylene-vinyl acetate copolymers.

Additional layers may be present in the overall structure to further increase the bulk thereof or to improve other properties of the end structure.

The thickness of the overall thermoformable sheet of the present invention is typically comprised between about 400 and about 1,300 µm. For most of the conventional applications a preferred thickness is in the range of from about 500 to about 1,000 µm, with a most preferred thickness in the range of from about 600 to about 900 µm.

The thickness of the foamed polypropylene layer (a) may range from about 250 to about 1,250 µm, and is preferably comprised between about 450 and about 950 µm, and more preferably between about 550 and about 850 µm.

When, according to a preferred embodiment of the present invention there are two foamed polypropylene layers the thickness of each one will be typically comprised between about 150 and about 700 µm, preferably between about 200 and about 450 µm, and more preferably between about 250 and about 400 µm.

Generally the optimum thickness of the foamed polypropylene layer or layers will depend on the flexural modulus of the polypropylene employed and can be easily determined, by trial and error, bearing in mind that the flexural modulus of the end multi-layer sheet should be higher than 400 MPa, preferably higher than 500 MPa, and even more preferably higher than 600 MPa.

The layer (b) is at least 3 µm thick. It can be very thick, particularly in the two layer embodiment, but in the other embodiments, where it is used as an intermediate adhesive layer, it has generally a thickness comprised between about 5 and about 35 µm, preferably between about 8 and abot 30 µm, and even more preferably between about 10 and about 25 µm.

When there is a gas-barrier layer, its thickness is generally comprised between about 3 and about 30 µm, preferably between about 4 and about 20 µm, and even more preferably between about 5 and about 15 µm.

The thickness of the possible tie layers, as usual, can be limited to few µm's, i.e. what is generally needed to provide for the desired bond.

The thickness of the heat-sealing layer will then be selected depending on the overall thickness desired and on the thickness of the other layers. Typically the thickness of the heat-sealing layer will be comprised between about 3 µm and about 100 µm, preferably between about 5 µm and about 80 µm, more preferably between about 8 µm and about 50 µm. Thicker layers can be employed particularly if it is necessary to provide the structure with some bulk while thinner layers may be necessary when the package comprises an easy opening feature involving as the first step breakage of the thin heat-sealing layer.

The resins used in the manufacture of the films according to the present invention can be suitably additivated as known in the art in order to improve the properties of the film or the manufacturing process thereof. As an example the resins may contain stabilizers, anti oxidants, pigments, UV absorbers, cross-linking enhancers or cross-linking inhibitors, anti-fog agents, slip and anti-blocking agents, etc., as conventionally used in this field.

In a preferred embodiment the present invention relates to a thermoformable, multi-layer, sheet comprising a chemically foamed layer (a) comprising polypropylene, at least one surface of which is directly adhered to a substantially unfoamed layer (b) comprising an ethylene-based polymer, said sheet being characterised in that the resin used for the foamed layer (a) is a blend of at least about 50 % by weight of polypropylene and from about 3 to less than about 50 % by weight of an ethylene-(C₃-C₈)α-olefin plastomer.

Chemical foaming is obtained by extruding the resins admixed with the suitable amount of a chemical blowing agent, preferably an endothermic chemical blowing agent.

A chemical foaming agent is a chemical or compound that reacts or decomposes at elevated temperatures, such as those employed in extrusion, to give a product that is normally a gas at atmospheric pressure. The most common chemical foaming agent is sodium bicarbonate with a small amount of citric or tartaric acid as a co-agent. These agents are typically in dry powder form and are dusted or master-batched into the thermoplastic pellets prior to introduction into the extrusion equipment. Proprietary alkali carbonate mixtures suitable as chemical foam agents are those commercialised by Boehringer Ingelheim under the trade name Hydrocerol™ or by Hoechst Celanese under the trade name Hostatron™. Generally these products are sold in the form of master-batches containing about 40 % of foaming agent and said master-batches are added to the pellets of the resins in an amount typically comprised between about 0.2 and about 3.0 % by weight, preferably between about 0.5 and about 2 % by weight.

One of the advantages of the thermoformable sheet according to the present invention is that it can be obtained by co-extrusion, using a flat die. The use of a flat die and of the flat sheet technology, providing for the calendering of the flat multilayer sheet following extrusion and quenching, allows a better thickness control of the end sheet. An annular die, as required in the physical foaming processes, could however be employed also in this case.

In a preferred embodiment of the present invention the multilayer partially foamed sheet is therefore fully co-extruded.

In a further preferred embodiment the sheet comprises at least two separate foam polypropylene layers wherein at least one of them is blended with an ethylene-(C₃-C₈)α-olefin plastomer and is directly adhered to a substantially unfoamed layer (b) comprising an ethylene-based polymer.

More preferably in this case the two foamed layers will comprise polypropylene of different flexural modulus, a low modulus polypropylene for the layer closer to the die cavity during thermoforming and a high modulus polypropylene for the foamed layer closer to the product to be packaged, and at least the high modulus polypropylene will be blended with an ethylene-(C₃-C₈)α-olefin plastomer and directly adhered to a substantially unfoamed layer (b) comprising an ethylene-based polymer.

When the structure contains two foamed layer, in a preferred embodiment the gas-barrier layer is sandwiched between the two layers.

In the co-extrusion process for the manufacture of a thermoformable sheet comprising two polypropylene foamed layers, the resins used for these two layers need not to contain the same foaming agent or the same amount of foaming agent. Typically the amount of foaming master-batch in an intermediate polypropylene foamed layer will be comprised between about 0.5 and about 1.5 % by weight, while it will be comprised between about 1 and about 2.5 % by weight if the foamed polypropylene layer is an outer layer.

The invention may be further understood by reference to the following examples that are provided for the purpose of representation and are not to be construed as limiting the scope of the invention. Unless stated otherwise, all percentages, parts, etc. are by weight.

### Example 1

The following resins have been co-extruded through a flat die in the sequence reported below. The layer number 1. is the sheet layer that in the thermoforming process is in contact with the heated cavity die. The thickness of each layer in the end partially foamed sheet is also reported between parentheses :
1. Low flexural modulus polypropylene (Montell YX37F sold by Montell - flexural modulus of about 1,200 MPa) blended with 2 % by weight of Hydrocerol™ CF 40 E (345 µm);
2. Rubber modified ethylene-α-olefin copolymer grafted with maleic anhydride (Admer™ 1335 AT sold by Mitsui) (20 µm);
3. Ethylene-vinyl alcohol copolymer (EVALC F-101 BZ sold by Kuraray) (20 µm);
4. Rubber modified ethylene-α-olefin copolymer grafted with maleic anhydride (Admer™ 1335 AT sold by Mitsui) (20 µm);
5. A blend of 84 % by weight of high flexural modulus polypropylene (Adstif™ 699 ADXP sold by Montell - flexural modulus of about 1950 MPa), 15 % by weight of an ethylene-octene plastomer with density 0.902 g/cm³ and Melt Index 10 g/10 min (ASTM 1238) (Exact™ 2M048 sold by DexPlastomers) and 1 % by weight of Hydrocerol™ CF 40 E (260 µm);
6. Rubber modified ethylene-α-olefin copolymer grafted with maleic anhydride (Admer™ 1335 AT sold by Mitsui) (22 µm);
7. Blend of 66 % by weight of ionomer (Surlyn™ 1601 sold by DuPont), 24 % by weight of modified ethylene-vinyl acetate copolymer (Elvaloy™ 741 A sold by DuPont), and 10 % of polybutene (Polybutene 8640 sold by Shell) (10 µm);
8. Ethylene-vinyl acetate copolymer (Escorene™ UL00909 sold by Exxon) (3 µm).

The co-extruded sheet was quenched on a chill roll and calendered.

Flexural modulus of the end sheet was about 850 MPa in MD (machine direction) and about 750 MPa in TD (transverse direction).

The density of the end sheet was about 0.7 g/cm³.

Oxygen permeability of the obtained structure was about 1-2 cm³/m².day.atm, when measured at 23 °C and 0 % R. H. according to ASTM D3985.
The thermoformability in-line of the obtained sheet was tested on a Multivac CD 6000 and RCD series machine for Vacuum Skin Packaging. The thermoforming conditions were as follows :
- heating temperature : 140-150 °C (with sandwich plate)
- forming pressure : 1.8-2.2 bar
- heating time : 4-5 seconds
- forming time : 4-5 seconds
- forming depth : 5 mm, 20 mm, and 27 mm.

In all the three depths tested the results were very good and both corners and grooves were very well defined with no creases or cracks.

The above structure could not be delaminated and the bond strength between layer 5 and adjacent layers 4 and 6, measured by an Instron 1122 dynamometer was higher than 51 N/25 mm.

Samples of the above structure were aged for 10, 15, 20, 25, 30, 35, and 40 days and then thermoformed under the following conditions :
- forming temperature : 140-150 °C (with sandwich plate)
- forming pressure : 1.8-2.2 bar
- heating time : 4-5 seconds
- forming time : 4-5 seconds
- forming depth : 27 mm.
No delamination occurred.

### Comparative Example 1

The structure of this Comparative Example was obtained by following the same procedure described in the foregoing example but replacing the blend used in layer 4 with a blend of 99 % by weight of high flexural modulus polypropylene (Adstif™ 699 ADXP sold by Montell - flexural modulus of about 1950 MPa), and 1 % by weight of Hydrocerol™ CF 40 E.

The bond between layer 5 and adjacent layers 4 and 6 was about 24 N/25 mm.

No delamination could be determined when thermoforming under the conditions reported above was carried out 10 days after the extrusion, while a more-or-less pronounced delamination could be visually detected upon thermoforming with the samples aged for more than 10 days.

## Claims

1. A thermoformable, multi-layer, sheet comprising a foamed layer (a) comprising polypropylene, at least one surface of which is directly adhered to a substantially unfoamed layer (b) comprising an ethylene-based polymer, said sheet being characterised in that the resin employed for the foamed layer is a blend of at least about 50 % by weight of polypropylene and from about 3 to less than about 50 % by weight of an ethylene-(C₃-C₈)α-olefin plastomer.

2. The thermoformable, multi-layer, sheet of claim 1 wherein the ethylene-(C₃-C₈)α-olefin plastomer to be blended with polypropylene for the foam layer is a low molecular weight ethylene-(C₃-C₈)α-olefin copolymer comprising ethylene and from about 5 to about 25 % by mole of at least one (C₃-C₈)α-olefin, polymerised in a substantially linear fashion by a homogeneous catalysis.

3. The thermoformable, multi-layer, sheet of claim 1 wherein the ethylene-(C₃-C₈)α-olefin plastomer to be blended with polypropylene for the foam layer is a low molecular weight ethylene-(C₄-C₈)α-olefin copolymer comprising ethylene and from about 5 to about 25 % by mole of at least one (C₄-C₈)α-olefin, polymerised in a substantially linear fashion using a single-site metallocene catalyst.

4. The thermoformable, multi-layer, sheet of claim 1 wherein the ethylene-(C₃-C₈)α-olefin plastomer has a density comprised between 0.885 and 0.905 g/cm³, preferably between 0.890 and 0.904 g/cm³, and more preferably between 0.895 and 0.903 g/cm³.

5. The thermoformable, multi-layer, sheet of claim 1 wherein the ethylene-(C₃-C₈)α-olefin plastomer has a Mw/Mn ratio in the range of about 1.5 to about 3.5, preferably in the range of about 2.0 and about 3.0.

6. The thermoformable, multi-layer, sheet of claim 1 wherein the ethylene-(C₃-C₈)α-olefin plastomer has a Melt Index in the range of about 1.0 and about 20 g/10 min, and preferably in the range of about 1.5 to about 12 g/10 min.

7. The thermoformable, multi-layer, sheet of claim 1 wherein the ethylene polymer of layer (b) is selected from the group consisting of ethylene homopolymers, ethylene copolymers with one or more other olefins and/or with a non-olefinic comonomer copolymerizable with ethylene, such as vinyl monomers, modified polymers thereof, and the like, modified ethylene homopolymers, modified ethylene co-polymers and their blends.

8. The thermoformable, multi-layer, sheet of claim 1 wherein layer (a) is chemically foamed.

9. The thermoformable, multi-layer, sheet of claim 1 which is co-extruded.

10. The thermoformable, multi-layer, sheet of claim 1 which also comprises an intermediate substantially unfoamed gas-barrier layer and an outer heat-sealable substantially unfoamed layer.

11. The thermoformable, multi-layer, sheet of claim 10 wherein the heat-sealing layer comprises one or more polyolefins having a melting point < 140 °C, and preferably < 130°C.
